# EUROPÄISCHE PATENTANMELDUNG

(11) **EP 3 290 372 A1**
(43) Veröffentlichungstag der Anmeldung: **07.03.2018**
(21) Anmeldenummer: 17450009.0
(22) Anmeldetag: 17.08.2017
(51) Int. Cl.: B65H 75/44

(54) **VORRICHTUNG ZUR EINFACHEN AUFROLLUNG EINES KABELS**

(30) Priorität: 30.08.2016 AT 2092016; 27.04.2017 AT 922017
(71) Anmelder: May, Stefan, 1020 Wien (AT)
(72) Erfinder: May, Stefan, 1020 Wien (AT)
(74) Vertreter: Keschmann, Marc

(57) **Zusammenfassung**

Kabelaufroller zur einfachen Aufrollung eines Kabels mit einem zylindrisches Gehäuse (1), in welchem eine drehbare Trommel (2) auf einer Rotationsache (3) sitzt und mittels einer Arretiervorrichtung (4) blockiert wird, wobei sowohl die Gehäusewand (5) als auch die Trommel (2) mit umlaufender Mantelfläche (6) offene L -förmige Aussparungen (7) und einen Trommelschlitz (15) aufweisen, in welche das Kabel eingelegt und durch Drehung der Trommel (2) um die Mantelfläche (6) der Trommel (2) gewickelt wird, wobei die Spiralfeder, welche in dem Federhaus (8) sitzt und mit der Rotationsachse (3) verbunden ist die Trommel (2) mit einem Drehmoment beaufschlagt, wobei diese durch einen Keil (18) auf der Arretiervorrichtung (4), welche mittels einer linearen Feder (10) gegen das Federhaus (8) gedrückt wird, mit gegenläufigen Zähnen (11) blockiert ist. Nach Einlegen eines Kabels und Lösen der Arretiervorrichtung (4) wird das Kabel durch die L-förmigen Aussparungen (7) in das Gehäuse gezogen und einfach automatisiert aufgewickelt.

## Beschreibung

Bei dem Kabel handelt es sich vorzugsweise um ein Audiokabel, wie es bei tragbaren Audiogeräten oder Freisprecheinrichtungen bei Mobiltelefonen verwendet wird. Ein Vorteil besteht vor allem darin, dass die Aufrollvorrichtung an jedem Kabel im Nachhinein befestigt werden kann und kein eigenes Kabeldesign notwendig ist.

Nach dem Stand der Technik sind bereits mehrere Arten von Aufrollern bekannt. Diese haben aber zumeist den Nachteil, dass ein speziell angefertigtes Kabel notwendig ist (z.B.
DE 202004005833 U1), oder aufgrund ihrer Größe und Bauart nicht an dem Kabel befestigt bleiben können. Des Weiteren kann das Kabel nicht schnell und einfach automatisiert aufgerollt werden (z.B. DE 202008002314 U1).

Der Erfindung liegt demnach die Aufgabe zugrunde, einen Kabelaufroller von geringer Größe und Gewicht für eine einfache und automatisierte Aufrollung von Kabeln der eingangs erwähnten Art zu schaffen. Der Kabelaufroller soll während des Gebrauchs auf dem Kabel befestigt bleiben und mittransportiert werden können.

Zur Lösung dieser Aufgabe sieht die Erfindung einen Kabelaufroller gemäß Anspruch 1 vor. Bevorzugte Weiterbildungen sind in den Unteransprüchen definiert.

Mit dieser Erfindung wurde das Problem gelöst ein Kabel schnell und einfach aufzuwickeln ohne dass dieses mittels einer Klemmvorrichtung oder Einhängen an der Achse einer Trommel befestigt werden muss. Mittels der Vorspannung durch die Spiralfeder und der Sperrvorrichtung wird der Aufwickelvorgang weiter vereinfacht. Das Kabel kann nach Vorspannung der Spiralfeder somit per Knopfdruck aufgewickelt werden. Dies ist um ein vielfaches schneller als wenn das Kabel manuell aufgewickelt werden muss.

Die Kabelaufrollvorrichtung besteht aus einem zylindrischen Gehäuse in welchem eine Trommel auf einer gekürzten Rotationsachse drehbar gelagert ist. Die Rotationsache verläuft normal zu dem Boden des Gehäuses und weist einen Schlitz, welcher die Spiralfeder aufnehmen kann, auf. Die Deckseite der Trommel schließt mit dem Gehäuse bündig ab. Um die Trommel in dem Gehäuse zu fixieren, rastet eine Nut am Ende der Rotationsache des Gehäuses auf der Innenseite der hohlen Achse der Trommel, in eine Einkerbung (Einstich) ein. Das Gehäuse weist eine zylindrische Form mit einem runden Boden und einer rundumlaufenden Seitenwand auf.

Die Vorrichtung dazu wurde dermaßen gestaltet, dass in einem Schlitz, welcher durchgehend durch Trommel und Gehäusewände mittig in Richtung parallel zu der Rotationsachse verläuft, ein Kabel eingelegt werden kann. Die Aussparungen in der Gehäusewand bestehen des Weiteren aus vertikalen Schlitzen und horizontale Schlitzen, welche in einem 90 Grad Winkel zueinander stehen und verbunden sind (L-Form). Die Aussparungen befinden sich gegenüberliegend in doppelter Ausführung in der Gehäusewand, wobei die horizontalen Schlitze in Rotationsrichtung des Aufrollvorgangs entlang der unteren Deckfläche ausgerichtet und die vertikalen Abschnitte in Richtung der oberen Deckfläche der Trommel und des Gehäuses offen sind und somit auch das Einlegen von Kabeln mit Verdickungen und ohne loses Ende ermöglicht wird. Die vertikalen Schlitze der L-förmigen Gehäuseaussparungen und die Aussparung der Trommel sind in einer Drehstellung der Trommel fluchtend, sodass nur in dieser Drehstellung das Kabel gleichzeitig in die Öffnungen der insbesondere L-förmigen Aussparungen des Gehäuses und der Trommel, eingeführt werden kann. Die horizontalen Schlitze der Aussparungen sind von Vorteil, um das Kabel während dem Aufroll- und Abrollvorgang in der richtigen Position zu halten und die Reibung zwischen Kabel und Gehäuse zu reduzieren. Ohne diese horizontalen Schlitze würde der Aufrollvorgang aufgrund der höheren Reibungskraft nur bedingt funktionieren. Durch die Drehbewegung wickelt sich das Kabel um die Mantelflächen der Trommel und die Enden des Kabels werden durch die horizontalen Schlitze der Aussparungen in das Gehäuse hineingezogen. Um eine Drehbewegung zwischen Gehäuse und Trommel mit eingelegtem Kabel zu ermöglichen, wurde die Achse gekürzt und mit der Trommel verbunden.

Die Trommel beinhaltet in dem unteren Teil ein Federhaus für eine Spiralfeder. Diese Spiralfeder ist mit einem Ende an der Innenseite der Wand des Federhauses befestigt und wird bei Zusammenbau mit dem anderen Ende durch einen Schlitz in der Rotationsache des Gehäuses geschoben. Durch Drehen der Trommel wird ein Drehmoment zwischen Trommel und Gehäuse beaufschlagt. Die Deckfläche der Trommel weist eine rechteckige langgezogene Erhebung auf beiden Seiten des Schlitzes auf, welche eine Drehung der Trommel ermöglicht und als Griff verwendet wird. Eine Arretiervorrichtung, in Form eines Keils, insbesondere in Form eines Schiebers mit Keil, verhindert, dass sich die Trommel aufgrund des Drehmoments zurückdrehen kann. Erst nach Einlegen des Kabels von oben in den durch die Trommel und das Gehäuse durchgehenden, insbesondere L-förmigen Schlitz, und Lösung der Arretiervorrichtung wird die Trommel freigeben und wickelt aufgrund des Drehmoments das Kabel automatisiert auf. Wenn das Kabel von der Trommel abgewickelt werden soll, muss der Benutzer an beiden Kabelenden mit gleichmäßiger Kraft ziehen. Das Kabel überträgt dadurch ein Drehmoment auf die Trommel, diese dreht sich entgegensetzt der Federspannung und erhöht somit das wirkende Drehmoment. Das eingelegte Kabel verbleibt im horizontalen Schlitz der L-förmigen Aussparungen, kann sich dadurch nicht ausfädeln und gleitet mit niedrigerer Reibung an der Gehäusewand entlang. Weiters verhindern beim Abrollen die horizontalen Schlitze der Aussparungen, dass aufgrund ungleichmäßiger Wicklung, ein Drehmoment in Richtung einer Achse parallel zu dem Boden wirkt und sich das Kabel dadurch ausfädelt. Um die Trommel an der Kleidung des Benutzers befestigen zu können, weist diese unterhalb des Bodens des Gehäuses bevorzugt eine Spange auf, ähnlich einer Befestigungsvorrichtung eines Kugelschreibers.

Die Arretiervorrichtung ist als ein Schieber, der in der Bodenfläche des Gehäuses eingelassen ist, ausgebildet. In der Mitte des Schiebers befindet sich eine Aussparung, sodass dieser trotz der Rotationsachse querverlaufend in das Gehäuse eingelegt werden kann. Eine lineare Feder, welche querverlaufend zur Rotationsachse angebracht wird, drückt den Schieber gegen den äußeren Teil des Federgehäuses. Dadurch blockiert ein Keil auf der Arretiervorrichtung die Außenseite des Federgehäuses, welche mit gegenläufigen Zähnen bestückt ist. Erst mit Druck auf den Schieber werden die Zähne freigeben und die Trommel kann sich in die Ausgangsposition zurückdrehen.

Dadurch ergibt sich der Vorteil, dass das Kabel ohne weitere Befestigung an der Mantelfläche der Trommel einfach und automatisiert aufgewickelt werden kann. Eine weitere Befestigung ist nicht notwendig, da das Kabel durch den Schlitz an der Achse der Trommel fixiert wird und sich um dessen Mantelfläche bei Drehung wickelt und durch die insbesondere L-förmigen Aussparungen der Gehäusewand in das Gehäuse hineingezogen wird. Um eine Aufwicklung zu ermöglichen, wird das Kabel mittig in die Aufrollvorrichtung eingelegt, sodass jeweils eine Hälfte des Kabels in das Gehäuse gezogen werden kann. Dadurch bleiben die an den Enden befestigten Teile, wie beispielweise ein Stecker, außerhalb des Gehäuses.

Die Trommel, welche einem zylindrischen Rotationskörper entspricht, beinhaltet einen vollständig durchgehenden Schlitz, welcher eine Aussparung in der oberen Deckfläche der Trommel und der Achse bildet. Der Schlitz läuft durchgehend quer zur Rotationsache und erlaubt das Kabel in Richtung parallel zu der Rotationsachse in die Trommel einzulegen. Die Höhe des Schlitzes ist bis zu der Aufnahme der Rotationsachse auf der Innenseite begrenzt. Ab dem unteren Ende der Aussparung nimmt die Trommel die Rotationsachse auf. Im Inneren der hohlen Trommelachse ist eine Einkerbung ausgebildet, die eine Nut auf der Rotationsache einrasten lässt um die Trommel im Gehäuse zu fixieren. Unterhalb der unteren Deckfläche der Trommel ist ein zylindrisches Federgehäuse, welches die Spiralfeder aufnimmt, ausgeformt. Die Außenseite des Federgehäuses ist mit Erhebungen ausgebildet. Diese Erhebungen greifen in den Keil der Arretierung ein und blockieren die Trommel gegen Rotation. Die obere Deckfläche weist einen Griff zur Beaufschlagung von Drehmoment und eine Klemmvorrichtung zur Befestigung der losen Enden auf.

Das Gehäuse der Aufrollvorrichtung besteht aus einem zylindrischen Rotationskörper mit einem Boden und einer senkrecht ausgebildeten Achse. Der Hohlraum des Gehäuses ist dermaßen gestaltet, dass dieser eine Trommel, welche auf die Achse gesteckt wird aufnehmen kann. Von besonderer Bedeutung ist gemäß einer bevorzugten Ausbildung, dass die aufnehmende Rotationsachse der Trommel innen hohl ist und die Achse des Gehäuses vor der Aussparung der Trommelachse endet.

Die Schlitze der L-förmigen Aussparungen sind in Richtung parallel zu der Rotationsachse und der oberen Deckfläche offen sowie horizontal parallel zu der unteren Deckfläche auf gegenüberliegenden Seitenwänden des Gehäuses in Rotationsrichtung des Aufrollvorgangs ausgebildet. Verengungen in den vertikalen Schlitzen der Aussparungen verhindert weiters, dass sich das Kabel während dem Auf- und Abwicklungsvorgang entlang der vertikalen Schlitze der Aussparungen ausfädeln kann.

Die Erfindung wird anhand von in der Zeichnung schematisch dargestellten Ausführungsbeispielen näher erläutert, wobei die Fig. 1 bis 6 eine erste Ausbildung der Erfindung und die Fig. 7 bis 12 eine zweite Ausbildung der Erfindung zeigen.
Fig. 1 zeigt eine Explosionsdarstellung der Aufrollvorrichtung
Fig. 2 zeigt einen Schnitt (Aufriss) durch die zusammengebaute Aufrollvorrichtung
Fig. 3 zeigt einen Schnitt (Grundriss) durch die zusammengebaute Aufrollvorrichtung
Fig. 4 zeigt die Trommel in einer perspektivischen Darstellung
Fig. 5 zeigt das Gehäuse in einer perspektivischen Darstellung
Fig. 6 zeigt den Schieber in einer perspektivischen Darstellung
Fig. 7 zeigt eine Explosionsdarstellung der Aufrollvorrichtung
Fig. 8 zeigt einen Schnitt (Aufriss) durch die zusammengebaute Aufrollvorrichtung
Fig. 9 zeigt einen Schnitt (Grundriss) durch die zusammengebaute Aufrollvorrichtung
Fig. 10 zeigt die Trommel in einer perspektivischen Darstellung Fig. 11 zeigt das Gehäuse in einer perspektivischen Darstellung
Fig. 12 zeigt den Schieber in einer perspektivischen Darstellung

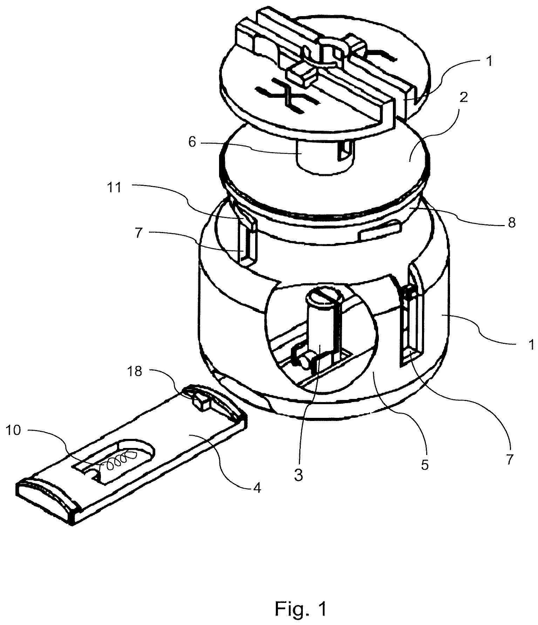

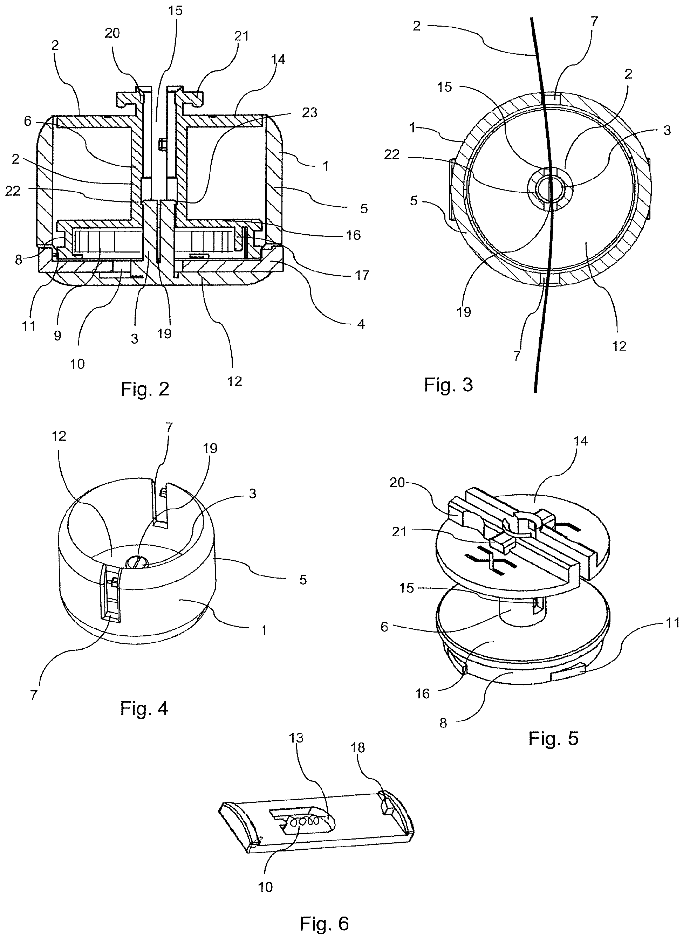

### Erste Ausbildung gemäß den Fig. 1 bis 6:

Der Kabelaufroller umfasst im Wesentlichen ein zylindrisches Gehäuse 1, eine Trommel 2, eine Arretiervorrichtung 4 in Form eines Schiebers, eine lineare Feder 10 und eine Spiralfeder 9. Das zylindrische Gehäuse 1 weist einen Boden 12, eine umlaufende Gehäusewand 5, welche eine in Richtung der Rotationsache zwei gegenüberliegende offene Aussparungen 7 ausgebildet hat, und eine mittige Rotationsachse 3 auf. Im zusammengebauten Zustand ist die Trommel 2 auf die Rotationsachse 3 aufgesetzt und drehbar mit dem Gehäuse verbunden, wobei die Rotationsachse 3 am Ende der Achse eine Nut 22 ausgebildet hat, welche im Inneren der hohlen Trommelachse in eine Einkerbung (Einstich) 23 einrastet. Die Arretiervorrichtung 4 ist mittig querverlaufend zur Rotationsache eingesetzt und dessen Aussparung 13 wird von einer linearen Feder 10 gegen die Rotationsachse 3 gedrückt. Die Spiralfeder 9 ist in das Federhaus 8 eingelegt. Die Trommel 2 weist eine obere Deckfläche 14 wie eine zylindrische Mantelfläche 6 zum Aufrollen des Kabels 24 auf.

Quer zu der Rotationsachse 3 der Trommel 2 verläuft entlang einer mittigen Längsachse ein Trommelschlitz 15 durch die obere Deckfläche 14 und Mantelfläche 6 der Trommel 2. Der Trommelschlitz 15 bildet somit eine Vertiefung und Aussparung gegenüberliegender Mantelflächen 6 aus, in welche das Kabel 24 quer zu der Rotationsache 3 eingelegt werden kann. Von besonderer Bedeutung ist, dass der Trommelschlitz 15 in Richtung der Rotationsachse 3 der oberen Deckfläche 14 eine Öffnung ausweist. Die obere Deckfläche 14 der Trommel 2 weist eine rechteckige langgezogene Erhebung 20 auf beiden Seiten des Trommelschlitzes 15 auf, welche eine Drehung der Trommel 2 ermöglicht und als Griff verwendet wird. Weiters weist die obere Deckfläche 14 eine Klemmvorrichtung 21 zur Befestigung des Kabels 25 auf. Die untere Deckfläche 16 der Trommel 2 beinhaltet ein zylindrisches Federgehäuse 8 zur Aufnahme einer Spiralfeder 9. Die Spiralfeder 9 ist mit einem Ende an der Innenseite dieses Federhauses 8 mittels einer Befestigungsvorrichtung 17 verbunden und mit dem anderen Ende mittels eines Schlitzes 19 in der Rotationsachse 3 fixiert.

Auch das zylindrische Gehäuse 1 mit kreisförmigem Boden 12 ist mit jeweils einer gegenüberliegenden Aussparung 7 versehen. Die Aussparung ist in Form eines Schlitzes in der Gehäusewand 5 ausgebildet und weist eine Öffnung in Richtung der oberen Deckfläche 14 entlang der Rotationsache 3 auf. In der richtigen Drehstellung sind die Aussparungen 7 und der Trommelschlitz 15 fluchtend angeordnet, sodass das Kabel 24 in den Schlitz eingelegt werden kann.

In zusammengebauten Zustand blockiert die Arretiervorrichtung 4 mit Hilfe eines Keils 18 und gegenläufigen Zähnen 11 die Trommel 2 gegen Rotation in Richtung gegen den Uhrzeigersinn. Der Keil 18 wird mittels einer linearen Feder gegen die Außenwand des Federhauses 8 gedrückt. Mit Bewegung in Richtung des Uhrzeigersinns wird die Trommel 2 mit einem Drehmoment durch die Spiralfeder 9 beaufschlagt. Das innere Ende der Spiralfeder 9 ist durch einen Schlitz 19 in der Rotationsache 3 mit dem Gehäuse 1 verbunden. Nach Einlegen des Kabels 24 wird durch Druck auf die Arretierungsvorrichtung 4 die Trommel 2 freigegeben und das Kabel 24 automatisiert aufgewickelt.

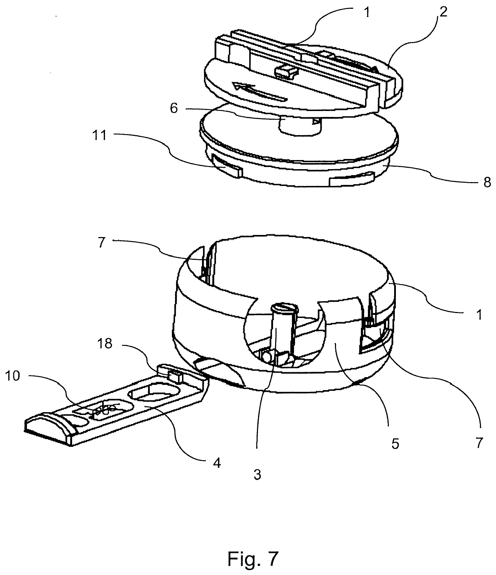

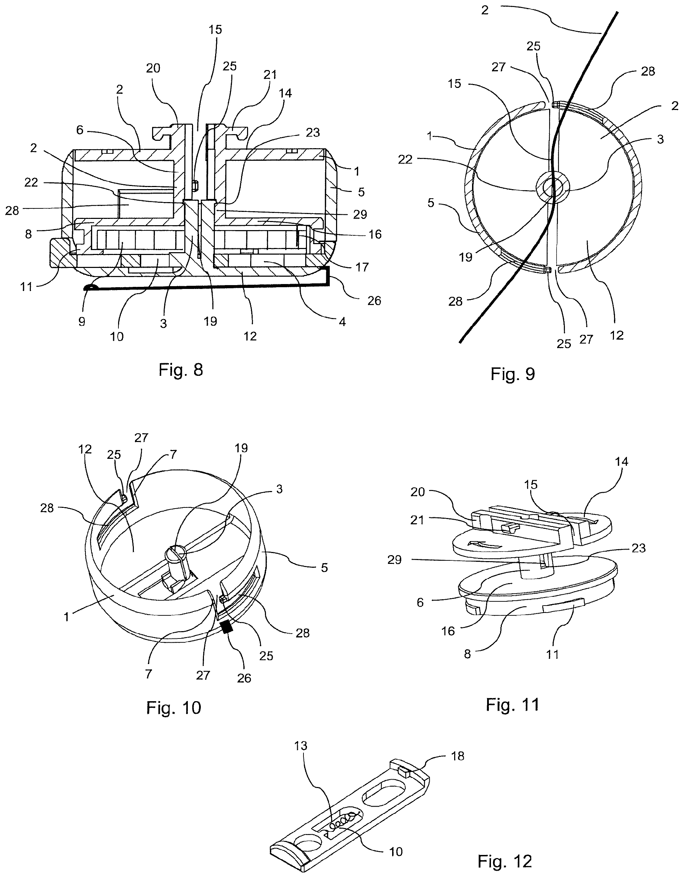

### Zweite Ausbildung gemäß den Fig. 7 bis 12:

Der Kabelaufroller umfasst im Wesentlichen ein zylindrisches Gehäuse 1, eine Trommel 2, eine Arretiervorrichtung 4 in Form eines Schiebers, eine lineare Feder 10, eine Spiralfeder 9 und eine Spange 26. Das zylindrische Gehäuse 1 weist einen Boden 12, eine umlaufende Gehäusewand 5, welche zwei gegenüberliegende L-förmige Aussparungen 7 ausgebildet hat, und eine mittige Rotationsachse 3 auf. Im zusammengebauten Zustand ist die Trommel 2 auf die Rotationsachse 3 aufgesetzt und drehbar mit dem Gehäuse verbunden, wobei die Rotationsachse 3 am Ende der Achse eine Nut 22 ausgebildet hat, welche im Inneren der hohlen Trommelachse 29 in eine Einkerbung (Einstich) 23 einrastet und somit ein Herausfallen der Trommel aus dem Gehäuse (1) verhindert. Die Arretiervorrichtung 4 ist mittig querverlaufend zur Rotationsache eingesetzt und dessen Aussparung 13 wird von einer linearen Feder 10 gegen die Rotationsachse 3 gedrückt. Die Spiralfeder 9 ist in das Federhaus 8 eingelegt. Die Trommel 2 weist eine obere Deckfläche 14 wie eine zylindrische Mantelfläche 6 zum Aufrollen des Kabels 24 auf.

Quer zu der Rotationsachse 3 der Trommel 2 verläuft entlang einer mittigen Längsachse ein Trommelschlitz 15 durch die obere Deckfläche 14 und Mantelfläche 6 der Trommel 2. Der Trommelschlitz 15 bildet somit eine Vertiefung und Aussparung gegenüberliegender Mantelflächen 6 aus, in welche das Kabel 24 quer zu der Rotationsache 3 eingelegt werden kann. Von besonderer Bedeutung ist, dass der Trommelschlitz 15 in Richtung der Rotationsachse 3 der oberen Deckfläche 14 eine Öffnung ausweist. Die obere Deckfläche 14 der Trommel 2 weist eine rechteckige langgezogene Erhebung 20 auf beiden Seiten des Trommelschlitzes 15 auf, welche eine Drehung der Trommel 2 ermöglicht und als Griff verwendet wird. Weiters weist die obere Deckfläche 14 eine Klemmvorrichtung 21 zur Befestigung der Enden des Kabels 25 auf. Die untere Deckfläche 16 der Trommel 2 beinhaltet ein zylindrisches Federgehäuse 8 zur Aufnahme einer Spiralfeder 9. Die Spiralfeder 9 ist mit einem Ende an der Innenseite dieses Federhauses 8 mittels einer Befestigungsvorrichtung 17 verbunden und mit dem anderen Ende mittels eines Schlitzes 19 in der Rotationsachse 3 fixiert.

Auch das zylindrische Gehäuse 1 mit kreisförmigem Boden 12 ist mit jeweils einer gegenüberliegenden L-förmigen Aussparung 7 versehen. Die L-förmigen Aussparungen 7 in der Gehäusewand 5 weisen des Weiteren vertikale Schlitze 27 und horizontale Schlitze 28 auf, welche auf der jeweiligen Seite der Gehäusewand 5 in einem 90 Grad Winkel zueinander stehen und verbunden sind. Die vertikalen Schlitze 27 und horizontalen Schlitze 28 sind Bestandteil der Aussparungen 7 und ergeben eine L-Form. Die Aussparungen 7 befinden sich gegenüberliegend in doppelter Ausführung in der Gehäusewand, wobei die horizontalen Schlitze 28 in Rotationsrichtung des Aufrollvorgangs entlang der unteren Deckfläche 16 ausgerichtet und die vertikalen Schlitze 27 in Richtung der oberen Deckfläche 14 der Trommel entlang der Rotationsache 3 und des Gehäuses offen sind.

Die vertikalen Schlitze 27 in Richtung der Rotationsache weisen Verengungen 25 an einer Stelle auf. In der richtigen Drehstellung sind die L-förmigen Aussparungen 7 und der Trommelschlitz 15 fluchtend angeordnet, sodass das Kabel 24 in die vertikalen Schlitze 27 eingelegt werden kann. Ein besonderer Vorteil durch die L-förmigen Aussparungen 7 ergibt sich dadurch, dass bei Abwicklung des Kabels dieses in den horizontalen Schlitzen 28 der Aussparungen 7 verbleibt, gegebenenfalls ein Drehmoment entlang einer Achse parallel zu dem Boden 12 verhindert und bei der Aufwicklung aufgrund verringerter Anpresskräfte die Reibungskräfte reduziert sind. Die Verengungen 25 verhindern weiters, dass das Kabel sich bei Zug entlang der vertikalen Schlitze 27 der L-förmigen Aussparungen 7 ausfädelt. Weiters weist der Boden 12 des zylindrischen Gehäuses 1 eine Spange 26 auf, welche zur Befestigung des Kabelaufrollers an der Kleidung des Benutzers verwendet werden kann.

In zusammengebautem Zustand blockiert die Arretiervorrichtung 4 mit Hilfe eines Keils 18 und gegenläufigen Zähnen 11 die Trommel 2 gegen Rotation in Richtung gegen den Uhrzeigersinn. Der Keil 18 wird mittels einer linearen Feder gegen die Außenwand des Federhauses 8 gedrückt. Mit Bewegung in Richtung des Uhrzeigersinns wird die Trommel 2 mit einem Drehmoment durch die Spiralfeder 9 beaufschlagt. Das innere Ende der Spiralfeder 9 ist durch einen Schlitz 19 in der Rotationsache 3 mit dem Gehäuse 1 verbunden. Nach Einlegen des Kabels 24 wird durch Druck auf die Arretierungsvorrichtung 4 die Trommel 2 freigegeben und das Kabel 24 automatisiert aufgewickelt.

### Bezugszeichenliste:

- 1: Zylindrisches Gehäuse
- 2: Trommel
- 3: Rotationsachse
- 4: Arretiervorrichtung
- 5: Gehäusewand
- 6: Mantelfläche
- 7: L-förmige Aussparungen
- 8: Federhaus
- 9: Spiralfeder
- 10: Lineare Feder
- 11: Gegenläufige Zähne
- 12: Boden
- 13: Aussparung der Arretiervorrichtung
- 14: Obere Deckfläche
- 15: Trommelschlitz
- 16: Untere Deckfläche
- 17: Befestigungsvorrichtung
- 18: Keil
- 19: Schlitz
- 20: rechteckige Erhebung
- 21: Klemmvorrichtung
- 22: Nut
- 23: Einkerbung (Einstich)
- 24: Kabel
- 25: Verengungen
- 26: Spange
- 27: Vertikale Schlitze (der Aussparungen
- 28: Horizontale Schlitze (der Aussparungen)
- 29: Hohle Trommelachse

## Patentansprüche

1. Kabelaufroller zur einfachen Aufrollung eines Kabels dadurch gekenzeichnet, dass ein zylindrisches Gehäuse (1), in welchem eine drehbare Trommel (2) auf einer Rotationsache (3) sitzt und mittels einer Arretiervorrichtung (4) blockiert wird, wobei die Trommel (2) ein Federhaus (8) aufweist, welches eine Spiralfeder (9) beinhaltet, welche mit einem Ende an der Trommel (2) mittels einer Befestigungsvorrichtung (17) fixiert und an dem anderen Ende durch einen Schlitz (19) in der Rotationsachse (3) mit dem Gehäuse (1) verbunden ist und dadurch die Trommel (2) mit einem Drehmoment beaufschlagt, welches das Kabel (24) nach Lösen der Arretiervorrichtung (4) um eine zylindrische Mantelfläche (6) der Trommel automatisiert aufwickelt.

2. Kabelaufroller nach Anspruch 1 **dadurch gekennzeichnet, dass** die Trommel (2) einen durchgehenden Trommelschlitz (15) durch die zylindrische Mantelfläche (6) und eine obere Deckfläche (14) aufweist und die Gehäusewand (5) Ausparungen, insbesondere L-förmige Aussparungen (7) aufweist, um ein Kabel aufzunehmen.

3. Kabelaufroller nach Anspruch 1 oder 2 **dadurch gekennzeichnet, dass** die L-förmigen Aussparungen (7) auf der jeweiligen Seite in der Gehäusewand (5) vertikale Schlitze (27) und horizontalen Schlitze (28) aufweisen, welche in einem 90 Grad Winkel zueinander verbunden sind und die horizontalen Schlitze (28) entlang einer unteren Deckfläche (16) in Rotationsrichtung des Aufrollvorgangs ausgerichtet und die vertikalen Schlitze (27) in Richtung der oberen Deckfläche (14) der Trommel entlang der Rotationsache (3) und des Gehäuses offen sind.

4. Kabelaufroller nach einem der Ansprüche 1 bis 3 **dadurch gekennzeichnet, dass** die vertikalen Schlitze (27) der L-förmigen Aussparungen (7) und der Trommelschlitz (15) fluchtend in den gegenüberliegenden Gehäusewänden (5) und der Mantelfläche (6) der Trommel (2) ausgebildet sind.

5. Kabelaufroller nach einem der Ansprüche 1 bis 4 **dadurch gekennzeichnet, dass** das die Rotationsachse (3) gekürzt und normal zur Bodenfläche senkrecht ausgebildet ist und am Ende der Achse eine Nut (22) ausgebildet hat, um die Trommel (2) im zylindrischen Gehäuse (1) zu fixieren, wobei im Inneren der hohlen Trommelachse (29) eine Einkerbung (Einstich) (23) ausgebildet ist, in welche die Nut (22) der Rotationsache (3) einrastet.

6. Kabelaufroller nach einem der Ansprüche 1 bis 5 **dadurch gekennzeichnet, dass** eine Arretierungsvorrichtung (4) in Form eines Schiebers mit einem Keil (18) ausgebildet ist, welcher mittels einer linearen Feder (10) an die Außenseite des Federhauses (8) drückbar ist und die Trommel (2) mit Hilfe von gegenläufigen Zähnen (11) gegen Rotation blockiert, wobei der Schieber quer zu der Rotationsachse (3) verläuft und eine mittige Aussparung (13) aufweist.

7. Kabelaufroller nach einem der Ansprüche 1 bis 6 **dadurch gekennzeichnet, dass** die obere Deckfläche (14) der Trommel (2) eine rechteckige Erhebung (20) auf beiden Seiten des Trommelschlitzes (15) aufweist, welche eine Drehung der Trommel (2) ermöglicht und als Griff verwendbar ist.

8. Kabelaufroller nach einem der Ansprüche 1 bis 7 **dadurch gekennzeichnet, dass** die obere Deckfläche (14) der Trommel (2) eine Befestigungsvorrichtung zur Befestigung der Kabelenden mittels einer Klemmvorrichtung (21) aufweist.

9. Kabelaufroller nach einem der Ansprüche 1 bis 8 **dadurch gekennzeichnet, dass** die L-förmige Aussparungen (7) Verengungen (25) in den vertikalen Schlitzen (27) aufweisen.

10. Kabelaufroller nach einem der Ansprüche 1 bis 9 **dadurch gekennzeichnet, dass** der Boden (12) des zylindrischen Gehäuses (1) außerhalb des Gehäuses (1) eine Spange (26) zur Befestigung an der Kleidung des Benutzers aufweist.
